# EUROPÄISCHE PATENTSCHRIFT

(11) **EP 1 360 983 B1**
(45) Veröffentlichungstag und Bekanntmachung des Hinweises auf die Patenterteilung: **01.03.2006**
(21) Anmeldenummer: 03009272.0
(22) Anmeldetag: 24.04.2003
(51) Int. Cl.: B01D 35/30

(54) **Filtereinheit für einfrierende Flüssigkeiten, insbesondere für einen Dosierblock einer Abgasbehandlungseinheit**
Filter unit for freezing liquids, especially for a dosing block in an exhaust gas treatment unit
Unité filtrante pour liquides susceptibles de geler, en particulier pour un système de dosage d'une unité de traitement de gaz d'échappement

(30) Priorität: 10.05.2002 DE 10220672
(43) Veröffentlichungstag der Anmeldung: 12.11.2003
(73) Patentinhaber: HYDRAULIK-RING GMBH, 97828 Marktheidenfeld (DE)
(72) Erfinder: Klotz, Stefan, 72631 Aichtal (DE); Maisch, Dieter, 72664 Kohlberg (DE)

(56) Entgegenhaltungen:
- DE-A- 2 121 533
- DE-A- 3 833 134
- US-A- 4 146 485
- US-A- 4 839 048
- US-A- 4 842 737

## Beschreibung

Die Erfindung betrifft eine Filtereinheit für einfrierende Flüssigkeiten, insbesondere für einen Dosierblock einer Abgasbehandlungseinheit, nach dem Oberbegriff des Anspruches 1.

Bei bekannten Filtereinheiten dieser Art wird über eine Pumpe eine wässrige Lösung, wie beispielsweise Harnstoff, Salzwasser, Wasser oder dergleichen, durch die Filtereinheit geleitet und dann bei einem bestimmten Druck einem Dosierblock z. B. einer Abgasnachbehandlungseinrichtung zugeführt. Beim Einfrieren des wässrigen Mediums tritt eine mediumspezifische Volumendehnung auf. Dieser Volumenzuwachs beträgt zwischen ca. 6 % bis ca. 10 %. Da bei den bekannten Filtereinheiten das Gehäuseaußenteil aus Metall besteht, führt die Volumendehnung schon nach relativer kurzer Zeit zu einer bleibenden Schädigung des Gehäuses.

Der Erfindung liegt die Aufgabe zugrunde, eine Filtereinheit dieser Art so auszubilden, daß das Gehäuse die beim Übergang vom flüssigen in den festen Aggregatszustand des Mediums auftretenden Volumenänderungen auch nach längerer Einsatzdauer beschädigungsfrei aufnehmen kann.

Diese Aufgabe wird bei einer Filtereinheit der gattungsbildenden Art erfindungsgemäß mit den kennzeichnenden Merkmalen des Anspruches 1 gelöst.

Infolge der erfindungsgemäßen Ausbildung wird der Mantelteil bei Druck- und Volumendehnungen des Mediums bei Änderung seines Aggregatszustandes elastisch verformt und kehrt anschließend in seine ursprüngliche Form zurück. Dadurch wird eine Beschädigung des Gehäuses auch nach langer Einsatzdauer sicher vermieden.

Weitere Merkmale der Erfindung ergeben sich aus den weiteren Ansprüchen, der Beschreibung und den Zeichnungen.

Die Erfindung wird nachstehend anhand zweier in den Zeichnungen dargestellten Ausführungsbeispiele näher beschrieben. Es zeigen:
- Fig. 1: im Axialschnitt eine erste Ausführungsform einer erfindungsgemäßen Filtereinheit in unverformter Lage,
- Fig. 2: die Filtereinheit nach Fig. 1 in verformter Lage,
- Fig. 3 und 4: eine zweite Ausführungsform einer erfindungsgemäßen Filtereinheit in Darstellungen entsprechend den Fig. 1 und 2,
- Fig. 5: in perspektivischer Darstellung einen Filtereinsatz der erfindungsgemäßen Filtereinheit.

Die in den Zeichnungen dargestellten Filtereinheiten 1, 1a werden zwischen einer (nicht dargestellten) Pumpe und einem (ebenfalls nicht dargestellten) Dosierblock, vorzugsweise einer Abgas-Nachbehandlungseinrichtung vorgesehen. Von der Pumpe wird ein wässriges Medium, wie beispielsweise Harnstofflösung, Salzwasser, Wasser oder dergleichen, in Pfeilrichtung P der Filtereinheit zugeleitet, die unter einem definierten Druck steht. Beim Betrieb der Filtereinheit wird das Medium eingefroren und anschließend wieder aufgetaut, wobei es zu Volumendehnungen beim Übergang vom flüssigen in den festen Aggregatszustand des Mediums kommt. Die Volumendehnungen betragen bei Harnstoff etwa 6 bis 8 % und bei Wasser etwa 10 % und sind daher relativ groß. Um solche Volumendehnungen einwandfrei aufnehmen zu können, weist die Filtereinheit ein Gehäuse mit einem elastisch verformbaren Mantelteil auf, wie noch erläutert wird.

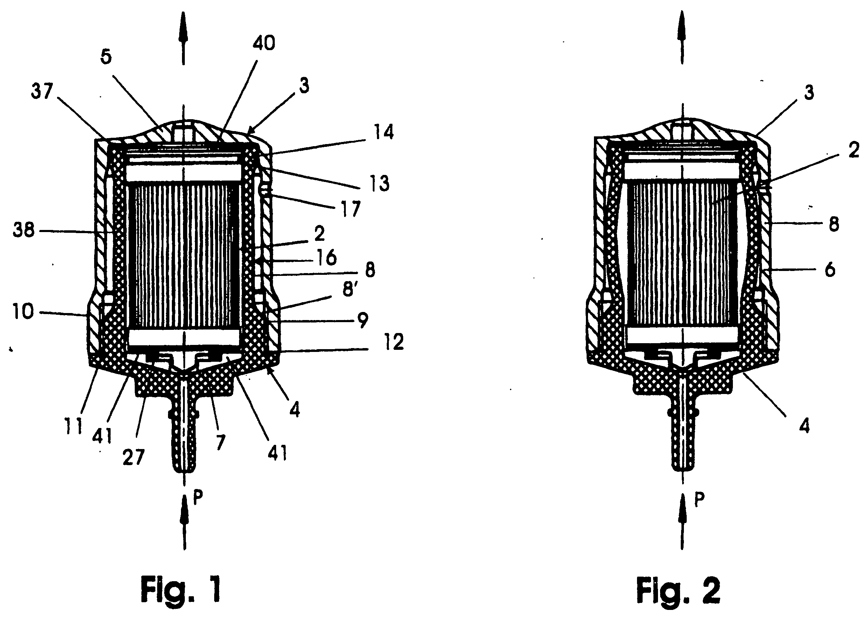

Die Filtereinheit 1 gemäß den Fig. 1 und 2 weist einen Filtereinsatz 2 auf, der in einem Gehäuse 3, 4 untergebracht ist. Das Gehäuse besteht aus einem Gehäuseaußenteil 3 und einem Deckelteil 4. Das Außenteil 3 ist napfförmig mit einem Boden 5 und einem zylindrischen Außenmantel 6 ausgebildet. Das Außenteil 3 besteht aus Metall, vorzugsweise aus Aluminium.

Das Deckelteil 4 ist ebenfalls napfförmig mit einem Boden 7 und einem zylindrischen Mantelteil 8 ausgebildet. Der Boden- und der Mantelteil 7, 8 sind einstückig aus elastisch verformbarem Material hergestellt. Vorzugsweise wird hierfür ein thermoplastisches Elastomer, wie insbesondere sogenannte Santoprene D 40° Shore der Firma Advanced Elastomer Systems, verwendet, das eine hohe Elastizität bei tiefer Temperatur von minus 40°C sowie eine Ermüdungsfestigkeit aufweist, die einen sechs- bis achtfachen Wert herkömmlicher Elastomere erreicht. Aus einem solchen Material läßt sich das Deckelteil 4 einfach durch Spritzen herstellen, so daß keine Vulkanisationsvorgänge erforderlich sind, was sich vorteilhaft auf die Herstellungskosten des Gehäuses und damit der Filtereinheit 1 auswirkt.

Im Übergangsbereich vom tellerförmigen Bodenteil 7 in den Mantelteil 8 hat der an den Boden anschließende Wandabschnitt 8' eine Wandstärke, die etwa doppelt so dick ist wie im übrigen Bereich. Der Wandabschnitt 8' weist eine äußere Mantelfläche 9 mit einem Außengewinde 12 auf, auf das der äußere Mantelteil 6 mit einem Innengewinde 11 am freien Ende 10 geschraubt wird.

Der Mantelteil 6 des Außenteiles 3 weist mit Abstand vom Boden 5 wenigstens eine Entlastungsbohrung 17 auf.

Der freie Rand 13 des Mantelteiles 8 hat größere Dicke als der übrige Mantelteil. Der Rand 13 weist eine umlaufende Ringnut 14 auf, in der eine als O-Ring ausgebildete Dichtung 15 liegt. Mit ihr liegt der Mantelteil 8 dichtend am Mantelteil 6 des Gehäuseaußenteiles 3 an. Im Bereich zwischen dem Rand 13 und dem Wandabschnitt 8' hat der Mantelteil 8 konstante Wandstärke, die im Ausführungsbeispiel etwas größer ist als die des äußeren Mantelteiles 6. Zwischen den beiden Mantelteilen 6, 8 ist ein Ringraum 16 gebildet.

Der Filtereinsatz 2 wird vom Mantelteil 8 und vom Boden 5 des Gehäuseaußenteiles 3 dicht umschlossen. Beim Einfrieren des Mediums kann sich der Mantelteil 8 unter dem auftretenden Volumenzuwachs des Mediums elastisch so verformen, daß es in den freien Ringraum 16 nach außen ausweicht (Fig. 2). Nach dem Auftauen des Mediums und einem eventuellen Druckabbau federt der Mantelteil 8 wieder in seine ursprüngliche Form gemäß Fig. 1 zurück. Der äußere Mantelteil 6 wird somit durch die Volumendehnung nicht in Mitleidenschaft gezogen. Dieser beschriebene Verformungsvorgang kann sich beliebig oft wiederholen, ohne daß der Mantelteil 6 beeinträchtigt wird.

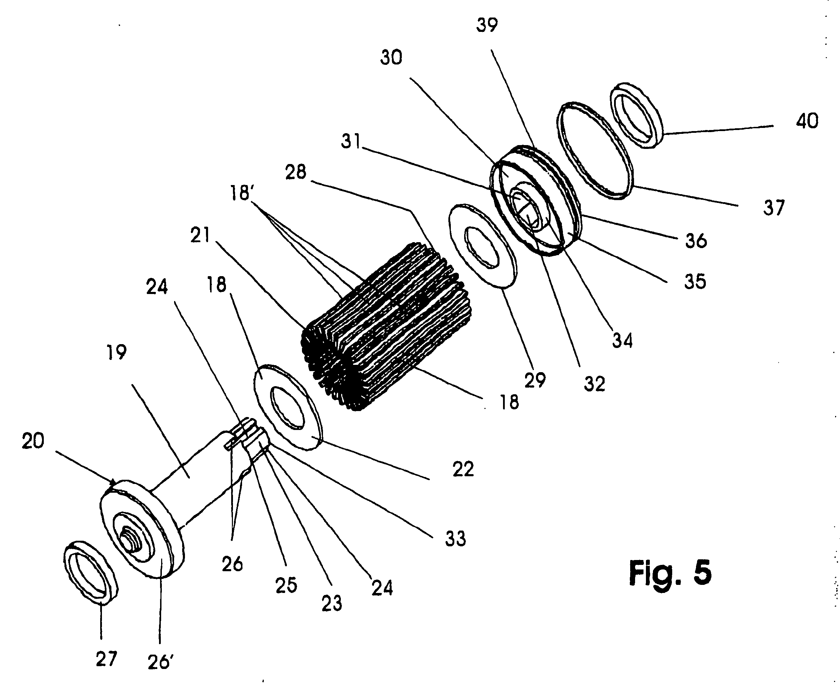

Wie Fig. 5 zeigt, weist der Filtereinsatz 2 einen Papiereinsatz 18 auf, der aus ziehharmonikaartig gefaltetem Filterpapier 18' besteht und hülsenartig ausgebildet ist. Er ist auf einem zapfenartigen Füllstück 19 angeordnet, an dessen einem Ende eine Entscheibe 20 vorgesehen ist. An ihr liegt der Papiereinsatz 18 mit seiner einen Stirnseite 21 unter Zwischenlage einer ringförmigen Klebefolie 22 an. Das Füllstück 19 weist ein verjüngtes Ende 23 auf, das axial verlaufende, mit gleichem umfangseitigen Abstand hintereinander liegende Schlitze 24 hat. Das verjüngte Ende 23 geht über eine radiale Schulterfläche 25 in das Füllstück 19 über. In die Schulterfläche 25 münden weitere, in der Mantelfläche des Füllstückes 19 vorgesehene Schlitze 26, die parallel zu den Schlitzen 24 liegen. Sie sind kürzer als diese, so daß sie sich nur über einen relativ kurzen Bereich des Füllstückes 19 erstrecken. Die Endscheibe 20 des Füllstückes 19 weist an ihrer vom Ende 23 abgewandten Stirnseite 26 eine (nicht näher dargestellte) Ringnut auf, in der ein Vorspannring 27 liegt, mit dem sich der Filtereinsatz 2 an Stegen 41 auf dem Boden 7 des Deckelteiles 4 abstützt (Fig. 1, 2).

Das verjüngte Ende 23 des Füllstückes 19 ragt bei montiertem Filtereinsatz 2 über die andere Stirnseite 28 des Papiereinsatzes 18. Auf dem verjüngten Ende 23 sitzt unter Zwischenlage einer weiteren ringscheibenförmigen Klebefolie 29 eine zweite Endscheibe 30 drehfest. Die Endscheibe 30 hat eine zentrale Öffnung 31 mit diametral einander gegenüberüberliegenden geraden Innenflächen 32, an denen der verjüngte Absatz 23 mit zwei einander gegenüberliegenden Stegen 33 flächig anliegt, die zwischen einander benachbarten Schlitzen 24 gebildet sind. Die Endscheibe 30 weist einen die Öffnung 31 begrenzenden Innenrand 34 und einen äußeren Rand 35 auf, der in seiner äußeren Mantelfläche eine Ringnut 36 hat. In ihr sitzt eine als O-Ring ausgebildete Dichtung 37, mit der der Filtereinsatz 2 dichtend an der Innenwand 38 des Mantelteiles 8 des Deckelteiles 4 anliegt (Fig. 1). In einer (nicht dargestellten) Nut in der Stirnseite 39 der Endscheibe 30 ist wie in der Endscheibe 20 ein Vorspannring 40 angeordnet, mit dem der Filtereinsatz 2 am Boden 5 des Außenteiles 3 dichtend anliegt (Fig. 1).

Durch den Filtereinsatz 2 und das Mantelteil 8 im metallischen Gehäuseaußenteil 3 ist eine Beheizung über Strahlungswärme des Au- . ßenteiles 3 und damit ein Auftauen des eingefrorenen Filterelementes möglich.

Für den Fall, daß im Ringraum 16 ein Gegendruck aufgebaut werden soll, entfällt die im Mantelteil 6 vorgesehene Entlastungsbohrung 17.

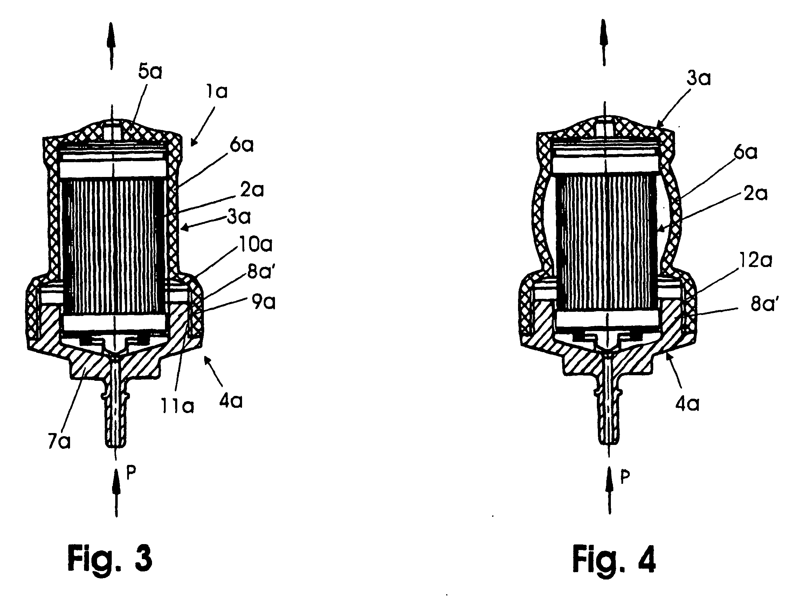

Bei der Ausführungsform nach den Fig. 3 und 4 besteht das Gehäuseaußenteil 3a aus dem elastisch verformbaren Material, vorzugsweise aus thermoplastischem Elastomer. Das Gehäuseaußenteil 3a kann daher gespritzt werden. Das Deckelteil 4a besteht aus dem Bodenteil 7a mit dem zylindrischen Abschnitt 8a'. Er weist die Mantelfläche 9a mit dem Außengewinde 12a auf. Das Deckelteil 4a besteht im Unterschied zur Ausführungsform nach den Fig. 1 und 2 aus Metall, vorzugsweise aus Aluminium, kann aber auch aus entsprechend festem Kunststoff hergestellt sein.

Das Außenteil 3a hat den Boden 5a, der mit dem Mantelteil 6a einstückig ausgebildet ist. Der Mantelteil 6a umgibt den Filtereinsatz 2a mit Abstand. Im Unterschied zum Außenteil 3 nach Fig. 1 ist der freie Rand 10a des Mantelteiles 6a relativ weit radial nach außen versetzt und weist ein Innengewinde 11a auf, mit dem das Außenteil 3a auf das Außengewinde 12a des Mantelteiles 8a' des Deckelteiles 4a geschraubt ist. Beim Einfrieren des das Filterelement 1a durchströmenden Mediums und bei der dadurch bedingten Volumenvergrößerung baucht sich das Mantelteil 6a elastisch entsprechend weit nach außen (Fig. 4). Beim anschließenden Auftauen nimmt das Mantelteil 6a wieder seine ursprüngliche zylindrische Form (Fig. 3) an, ohne daß das Gehäuseaußenteil 3a beschädigt wird.

Auch bei dieser Ausführungsform wird der Filtereinsatz 2a von außen dicht umschlossen.

Diese Ausführungsform, bei der nur das elastisch verformbare Kunststoffaußengehäuse 3a, 4a vorgesehen ist, ist konstruktiv einfach und kostengünstig herstellbar.

## Patentansprüche

1. Filtereinheit für einfrierende Flüssigkeiten für einen Dosierblock einer Abgasnachbehandlungseinheit, mit mindestens einem Filtereinsatz (2, 2a), der in einem Gehäuse (3, 4, 3a, 4a) untergebracht ist, das ein Außen- und ein Deckelteil aufweist,
**dadurch gekennzeichnet, daß** der Filtereinsatz (2, 2a) mindestens teilweise von einem elastisch verformbaren Mantelteil (8, 6a) umgeben ist, der Teil des den Filtereinsatz (2, 2a) aufnehmenden Gehäuses (3, 4; 3a, 4a) ist.

2. Filtereinheit nach Anspruch 1,
**dadurch gekennzeichnet, daß** der Mantelteil (8; 6a) Teil des Deckelteiles (4) und/oder des Außenteiles (3a) ist.

3. Filtereinheit nach Anspruch 1 oder 2,
**dadurch gekennzeichnet, daß** der Mantelteil (6; 6a) durch einen Zylinderabschnitt des Deckelteiles (4) und/oder des Außenteiles (3a) gebildet ist.

4. Filtereinheit nach einem der Ansprüche 1 bis 3,
**dadurch gekennzeichnet, daß** der Mantelteil (8; 6a) einteilig mit dem Deckelteil (4) und/oder dem Außenteil (3a) ausgebildet ist.

5. Filtereinheit nach Anspruch 4,
**dadurch gekennzeichnet, daß** der Mantelteil (8; 6a) mit dem Deckelteil (4) und/oder dem Außenteil (3a) als Spritzgußteil ausgebildet ist.

6. Filtereinheit nach Anspruch 4,
**dadurch gekennzeichnet, daß** der Mantelteil (8; 6a) aus thermoplastischem Kunststoff, vorzugsweise einem thermoplastischen Elastomer, besteht.

7. Filtereinheit nach einem der Ansprüche 1 bis 6,
**dadurch gekennzeichnet, daß** zwischen dem Mantelteil (8) des Deckelteiles (4) und dem Mantelteil (6) des Außenteiles (3) ein Ringraum (16) gebildet ist.

8. Filtereinheit nach Anspruch 7,
**dadurch gekennzeichnet, daß** der Mantelteil (8) des Deckelteiles (4) in unverformter Lage vom Filtereinsatz (2) und vom Mantelteil (6) des Außenteiles (3) Abstand hat.

9. Filtereinheit nach einem der Ansprüche 1 bis 8,
**dadurch gekennzeichnet, daß** das Außenteil (3; 3a) und das Deckelteil (4; 4a) miteinander verbunden sind.

10. Filtereinheit nach einem der Ansprüche 1 bis 9,
**dadurch gekennzeichnet, daß** der Mantelteil (8) im Bereich seines freien Randes (13) abgedichtet am Außenteil (3) anliegt.

11. Filtereinheit nach einem der Ansprüche 9 oder 10,
**dadurch gekennzeichnet, daß** der Mantelteil (8, 8a) des Deckelteiles (4, 4a) einen verdickten Abschnitt (8', 8a') aufweist, der mit einem Außengewinde (12, 12a) versehen ist.

12. Filtereinheit nach Anspruch 11,
**dadurch gekennzeichnet, daß** der verdickte Wandabschnitt (8'; 8a') einen zylindrischen Rand des Deckelteiles (4; 4a) bildet.

13. Filter einheit nach einem der Ansprüche 1 bis 12,
**dadurch gekennzeichnet, daß** das Außenteil (3) und/oder das Deckelteil (4a) aus Metall, vorzugsweise aus Aluminium, besteht.

## Claims

1. A filter unit for freezing liquids for a metering block of an exhaust after-treatment unit, having at least one filter insert (2, 2a) which is accommodated in a housing (3, 4; 3a, 4a) having an outer part and a cover part,
**characterised in that** the filter insert (2, 2a) is at least partly surrounded by a resiliently deformable casing part (8, 6a) which is part of the housing (3, 4; 3a, 4a) receiving the filter insert (2, 2a).

2. A filter unit according to Claim 1,
**characterised in that** the casing part (8; 6a) is part of the cover part (4) and/or the outer part (3a).

3. A filter unit according to Claim 1 or 2,
**characterised in that** the casing part (6; 6a) is formed by a cylinder section of the cover part (4) and/or of the outer part (3a).

4. A filter unit according to one of Claims 1 to 3,
**characterised in that** the casing part (8; 6a) is constructed in one piece with the cover part (4) and/or the outer part (3a).

5. A filter unit according to Claim 4,
**characterised in that** the casing part (8; 6a) is constructed with the cover part (4) and/or the outer part (3a), as an injection moulded part.

6. A filter unit according to Claim 4,
**characterised in that** the casing part (8; 6a) is made from thermoplastic synthetic material, preferably a thermoplastic elastomer.

7. A filter unit according to one of Claims 1 to 6,
**characterised in that** an annular space (16) is formed between the casing part (8) of the cover part (4) and the casing part (6) of the outer part (3).

8. A filter unit according to Claim 7,
**characterised in that** in the undeformed position the casing part (8) of the cover part (4) is at a spacing from the filter insert (2) and from the casing part (6) of the outer part (3).

9. A filter unit according to one of Claims 1 to 8,
**characterised in that** the outer part (3; 3a) and the cover part (4; 4a) are connected to one another.

10. A filter unit according to one of Claims 1 to 9,
**characterised in that**, in the region of its free edge (13), the casing part (8) abuts in sealed manner against the outer part (3).

11. A filter unit according to one of Claims 9 or 10,
**characterised in that** the casing part (8, 8a) of the cover part (4, 4a) has a thickened section (8', 8a') which is provided with an external thread (12, 12a).

12. A filter unit according to Claim 11,
**characterised in that** the thickened wall section (8'; 8a') forms a cylindrical edge of the cover part (4; 4a).

13. A filter unit according to one of Claims 1 to 12,
**characterised in that** the outer part (3) and/or the cover part (4a) are made from metal, preferably aluminium.

## Revendications

1. Unité filtrante pour liquides susceptibles de geler pour un système de dosage d'unité de traitement de gaz d'échappement, avec au moins une cartouche filtrante (2, 2a) disposée dans un boîtier (3, 4 ; 3a, 4a) présentant une partie externe et une partie de couvercle, **caractérisée en ce que** la cartouche filtrante (2, 2a) est entourée au moins en partie d'une partie enveloppante (8, 6a) élastiquement déformable faisant partie du boîtier (3, 4 ; 3a, 4a) contenant la cartouche filtrante (2, 2a).

2. Unité filtrante selon la revendication 1, **caractérisée en ce que** la partie enveloppante (8 ; 6a) fait partie de la partie de couvercle (4) et/ou de la partie externe (3a).

3. Unité filtrante selon la revendication 1 ou 2, **caractérisée en ce que** la partie enveloppante (6 ; 6a) est formée par un segment cylindrique de la partie de couvercle (4) et/ou de la partie externe (3a).

4. Unité filtrante selon l'une quelconque des revendications 1 à 3, **caractérisée en ce que** la partie enveloppante (8 ; 6a) est configurée en une seule pièce avec la partie de couvercle (4) et/ou la partie externe (3a).

5. Unité filtrante selon la revendication 4, **caractérisée en ce que** la partie enveloppante (8 ; 6a) prend la forme d'une pièce moulée par injection avec la partie de couvercle (4) et/ou la partie externe (3a).

6. Unité filtrante selon la revendication 4, **caractérisée en ce que** la partie enveloppante (8 ; 6a) est en matière synthétique thermoplastique, de préférence en élastomère thermoplastique.

7. Unité filtrante selon l'une quelconque des revendications 1 à 6, **caractérisée en ce qu'**un espace circulaire (16) est formé entre la partie enveloppante (8) de la partie de couvercle (4) et la partie enveloppante (6) de la partie externe (3).

8. Unité filtrante selon la revendication 7, **caractérisée en ce que** la partie enveloppante (8) de la partie de couvercle (4) est disposée à l'état déformé à une certaine distance de la cartouche filtrante (2) et de la partie enveloppante (6) de la partie externe (3).

9. Unité filtrante selon l'une quelconque des revendications 1 à 8, **caractérisée en ce que** la partie externe (3 ; 3a) et la partie de couvercle (4 ; 4a) sont reliées entre elles.

10. Unité filtrante selon l'une quelconque des revendications 1 à 9, **caractérisée en ce que** la partie enveloppante (8) est rendue étanche au niveau de son bord (13) libre situé au niveau de la partie externe (3).

11. Unité filtrante selon l'une quelconque des revendications 9 ou 10, **caractérisée en ce que** la partie enveloppante (8, 8a) de la partie de couvercle (4, 4a) présente un segment épaissi (8', 8a') pourvu d'un filetage externe (12, 12a).

12. Unité filtrante selon la revendication 11, **caractérisée en ce que** le segment de paroi épaissi (8' ; 8a') forme un bord cylindrique de la partie de couvercle (4 ; 4a).

13. Unité filtrante selon l'une quelconque des revendications 1 à 12, **caractérisée en ce que** la partie externe (3) et/ou la partie de couvercle (4a) est en métal, de préférence en aluminium.
